# EUROPEAN PATENT SPECIFICATION

(11) **EP 4 436 811 B1**
(45) Date of publication and mention of the grant of the patent: **22.10.2025**
(21) Application number: 22829588.7
(22) Date of filing: 24.11.2022
(51) Int. Cl.: B60K 6/26, B60K 6/48, B60K 6/405, B60K 6/543, B62M 7/12, B60K 7/00

(54) **SADDLE-RIDE MOTORCYCLE OF SCOOTER TYPE WITH HYBRID PROPULSION**
MOTORROLLER MIT HYBRIDANTRIEB
SCOOTER À PROPULSION HYBRIDE

(30) Priority: 24.11.2021 IT 202100029699
(43) Date of publication of application: 02.10.2024
(73) Proprietor: Piaggio & C. S.P.A., 56025 Pontedera Pisa (IT)
(72) Inventor: MARIOTTI, Walter, 56025 Pontedera (PI) (IT)
(74) Representative: Mannucci, Michele
(86) International application number: PCT/IB2022/061390
(87) International publication number: WO 2023/095055

(56) References cited:
- CN-A- 101 941 502
- CN-Y- 201 176 121
- DE-A1- 102019 116 648

## Description

### FIELD OF THE INVENTION

The present invention belongs to the field of saddle-ride vehicle manufacturing. In particular, the invention relates to a two or three-wheeled vehicle provided with a hybrid propulsion unit, i.e., a propulsion unit comprising a thermal engine and a preferably reversible electric machine which can be used either as an electric motor for increasing the torque available to the driving wheel, or as a generator for recharging a battery pack connected to the same electric machine.

### PRIOR ART

Over the last few years, two or three-wheeled motor vehicles with hybrid propulsion have been proposed, in which an electric machine is added to the common internal combustion engine. The purpose of this type of propulsors is substantially to exploit the internal combustion engine in high efficiency conditions and to recover energy through the electric machine when decelerating and braking, and possibly to exploit the electric machine as the only propulsor. The general aim of hybrid propulsion is to reduce the emissions of pollutants associated with the operation of internal combustion engines.

An example of a two-wheeled motorcycle with hybrid propulsion is described and shown in patent EP1572486 to the same Applicant. In particular, EP1572486 relates to a scooter type vehicle. As known, compared to other vehicles, a scooter is distinguished by the presence of a frame which is substantially open in a central region thereof and of a footrest, which globally allow the motorcyclist to maintain a riding position with an erect posture and closed and parallel legs. In a scooter, the thermal engine is not installed on the frame, but rather is part of the rear suspension. In fact, the thermal engine is integral with a support arm (swingarm) which supports the rear wheel and which is pivoted to the frame through a fulcrum. The latter allows the arm to swing with respect to the frame following the loads acting on the rear suspension. One or more shock absorbers between the frame and the support arm complete the rear suspension.

In the solution described in EP1572486 to the same Applicant, a transmission of the CVT type is provided between the shaft of the thermal engine and a propulsion shaft; this CVT transmission comprises a driving pulley fitted to the shaft of the thermal engine and a driven pulley fitted to a transmission shaft connected, via a gear pair, to the rear wheel. The CVT transmission comprises a clutch operatively interposed between the driven pulley and the transmission shaft, wherein this clutch comprises a first clutch element connected to the driven pulley and a second bell-shaped clutch element connected to the transmission shaft. In the solution of EP1572486 there is also provided an electric machine whose rotor is connected to the (bell-shaped) driving element through coupling means interposed between the driven pulley and the first clutch element so as to selectively connect these two elements, i.e., to allow or prevent a connection of the electric machine to the transmission.

Patent US5193634 discloses another hybrid propulsion system for a motorcycle which can in part be traced back to the system described above. In fact, there is still a CVT transmission provided with a clutch which allows or prevents the transmission of motion generated by the thermal engine to the rear driving wheel. In this case, the output shaft of the electric machine is connected to the transmission shaft through a transmission so that the torque generated by the electric motor is transmitted to the transmission shaft only if the speed of the electric motor is higher than that of the same driving shaft.

CN 202 176 121 Y, CN 101 941 502 A and D 10 2019 116648 A1 disclose hybrid motorcycle propulsion units using an electric machine housed within the rear wheel.

The Applicant has found that the solutions described above, while effective in terms of operation, have a rather complex configuration which strongly affects the design and construction costs. In the case, for example, of the solution described in EP1572486, the electric machine is strongly integrated with the transmission which connects the thermal engine to the rear wheel. This leads to a *"rigid"* production line, i.e., a production line exclusively dedicated to the assembly of the hybrid system, which can thus only be used to manufacture a single scooter model. Therefore, the known solutions are characterized by strong limitations in terms of production versatility.

### SUMMARY

The main task of the present invention is to provide a saddle-ride vehicle which allows the abovementioned drawbacks to be overcome, or at least limited. Within the scope of this task, a first object of the present invention is to provide a saddle-ride vehicle with hybrid propulsion which can be assembled in a simpler and more versatile way as compared to known solutions. Another object of the present invention is to provide a hybrid propulsion saddle-ride vehicle in which the operation of the thermal engine and of the electric machine can be optimized in terms of torque transmission to the driving wheel. Last but not least, an object of the present invention is to provide a saddle riding vehicle which is reliable and easy to be manufactured in a cost-effective manner.

The Applicant has found that the abovementioned tasks and objects can be achieved by separating the electric machine from the transmission assembly intended to transfer the torque generated by the thermal engine to the driving wheel. More precisely, this separation is achieved by placing the electric machine in a shell arranged inside the rim of the driving wheel and mounted on a portion of another shell containing the transmission assembly. In this way, the electric machine is unconstrained by and external to the transmission assembly.

In particular, the tasks and objects set out are achieved by a saddle-ride motorcycle comprising at least one driving wheel and a propulsion unit of the hybrid type. The latter comprises a thermal combustion engine, which includes a driving shaft, and a transmission assembly which mechanically connects said driving shaft to said at least one driving wheel. This transmission assembly is at least partially housed in a first shell and comprises at least one transmission shaft which protrudes from the first shell and which is connected to the hub of the driving wheel. The hybrid propulsion unit further comprises an electric machine which can be operated in combination with or independently of the thermal combustion engine.

According to the invention, the electric machine is housed in a second shell arranged inside the rim of the driving wheel; said second shell is rigidly connected to the first shell and is crossed by the transmission shaft. The electric machine comprises a stator which holds a fixed position inside the second shell and a rotor which is instead constrained to the transmission shaft to rotate inside the second shell. The latter is therefore configured to enclose the stator and rotor, thus isolating these components from the external environment.

In a possible embodiment, the first shell comprises at least a first portion and a second portion connected to each other, wherein the second portion is coupled with said second shell.

Preferably, anti-rotation means are provided between the first shell and the second shell which prevent or dampen the relative rotation between the first shell and the second shell while the motorcycle is running.

In a preferred embodiment thereof, the second shell comprises a first half-shell and a second half-shell rigidly connected to each other.

In a possible variant, the first half-shell is rigidly connected to the second portion of the first shell.

Preferably, the second shell is pivotably supported on said transmission shaft.

In a possible embodiment, the stator of the electric machine is connected to the first half-shell and comprises stator windings.

According to a possible embodiment, the rotor of the electric machine comprises a support portion supporting a plurality of rotor windings, wherein such support portion is connected, directly or indirectly, to the transmission shaft so as to rotate at the same speed.

Preferably, the rotor is arranged within the second shell and rotates about the transmission shaft in a radially outer position relative to the stator.

According to a preferred embodiment, the rim of the driving wheel is connected to a first portion of said transmission shaft different from a second portion thereof on which the second shell and the rotor rest. Preferably, the transmission shaft comprises a third portion operatively connected to the transmission assembly, wherein said first portion and third portion are opposite to each other with respect to said second portion.

According to a preferred embodiment, the rim of the driving wheel and said rotor are torsionally constrained to each other.

### LIST OF THE FIGURES

Further features and advantages of the invention will become more evident from the following detailed description of some preferred, but not exclusive, embodiments of the saddle-ride vehicle, illustrated for indicating and non-limiting purposes with the aid of the accompanying drawings, wherein:
- Figure 1 is a perspective view of a driving wheel assembly of a motor vehicle according to the present invention;
- Figure 2 is an exploded view of the assembly of Figure 1;
- Figure 3 is a sectional view of the assembly of Figure 1;
- Figure 4 is an exploded view of the assembly of Figure 3;
- Figure 5 is a side view of the assembly of Figure 1;
- Figure 6 is a sectional view according to the section plane VI-VI of Figure 5;
- Figures 7 and 8 are perspective views from different observation points of a component of the driving wheel assembly of Figure 1;
- Figure 9 is a sectional view of the component shown in Figures 7 and 8.

The same reference numerals and letters in the figures identify the same elements or components.

### DETAILED DESCRIPTION

With reference to the aforementioned figures, the present invention therefore relates to a saddle-ride vehicle, meaning by this expression any two-wheeled motorbike or motorcycle having at least two wheels, i.e., at least one front wheel and at least one rear wheel. Therefore, also motorcycles with three wheels, having two front steering wheels and a rear driving wheel or alternatively a front steering wheel and a pair of rear driving wheels, also fall within this definition. The definition of saddle-ride vehicle also includes quadricycles having, for example, two front steering wheels and two rear driving wheels. Hereinafter, the saddle-ride vehicle 1 will also be indicated by the term motorcycle 1.

Hereinafter, reference will be made in particular to a *"scooter-type"* two-wheeled motorcycle, but the following considerations are also valid for a three-wheeled motorcycle having a rear driving wheel and two steering and tilting front wheels.

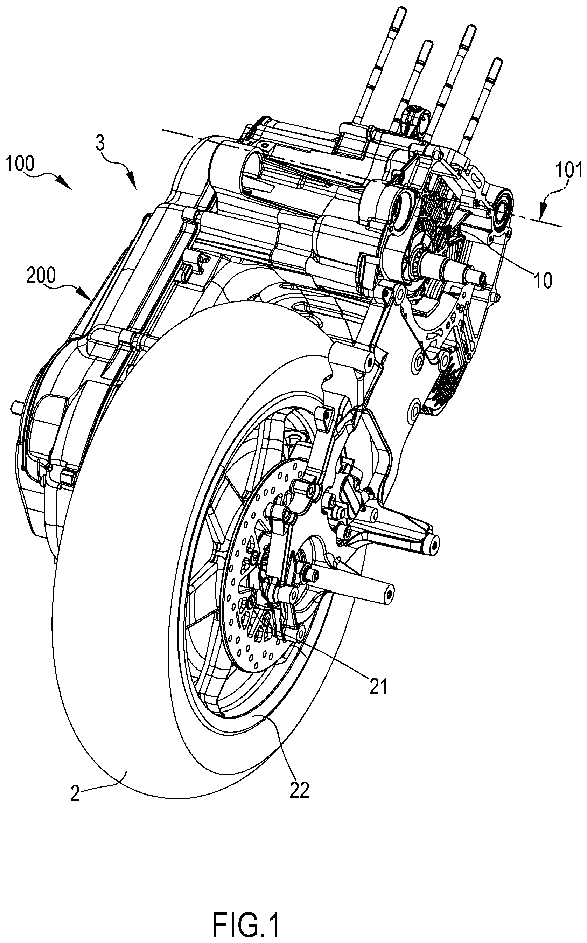

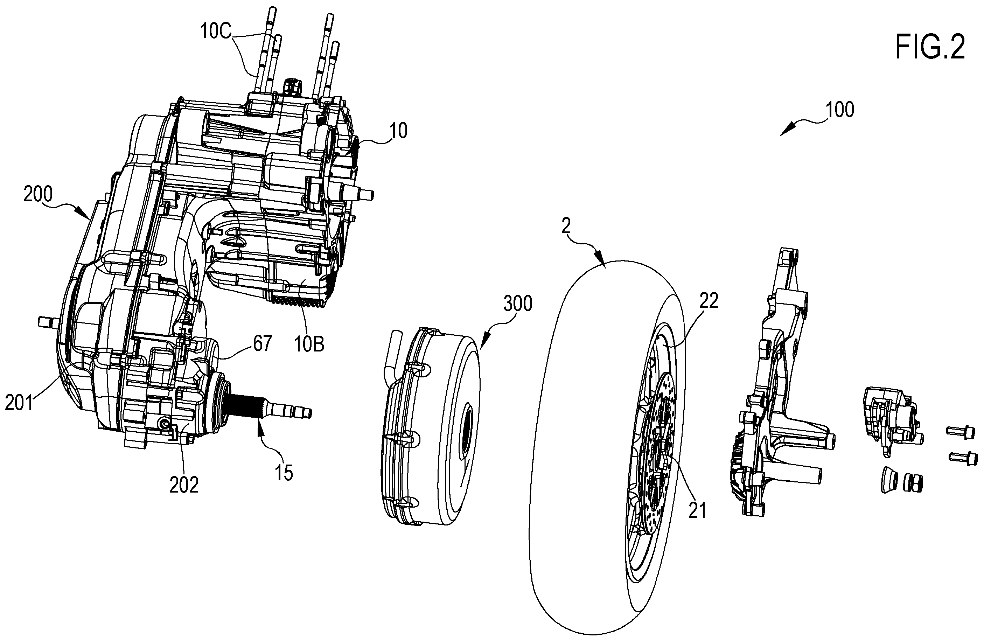

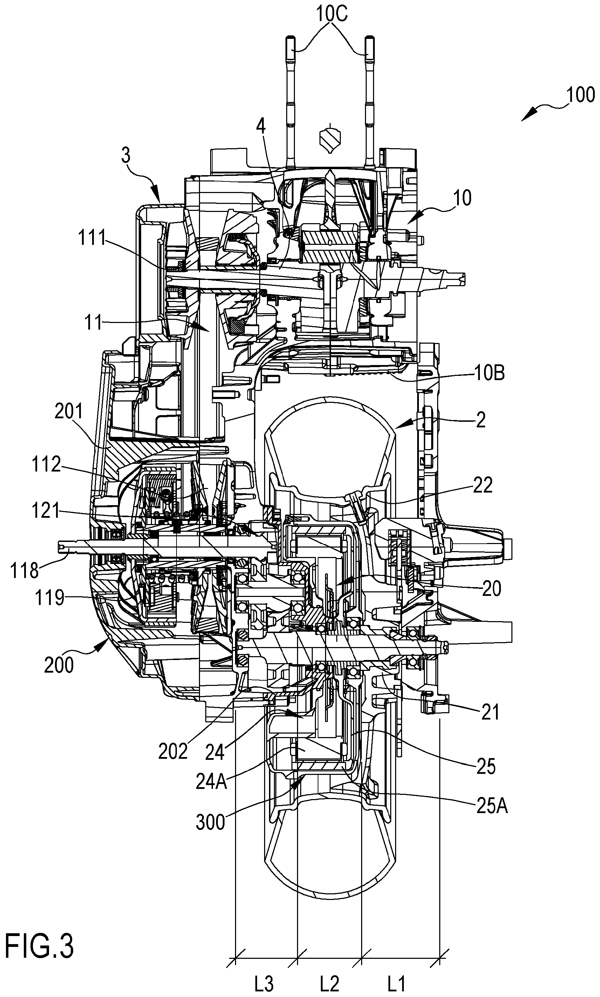

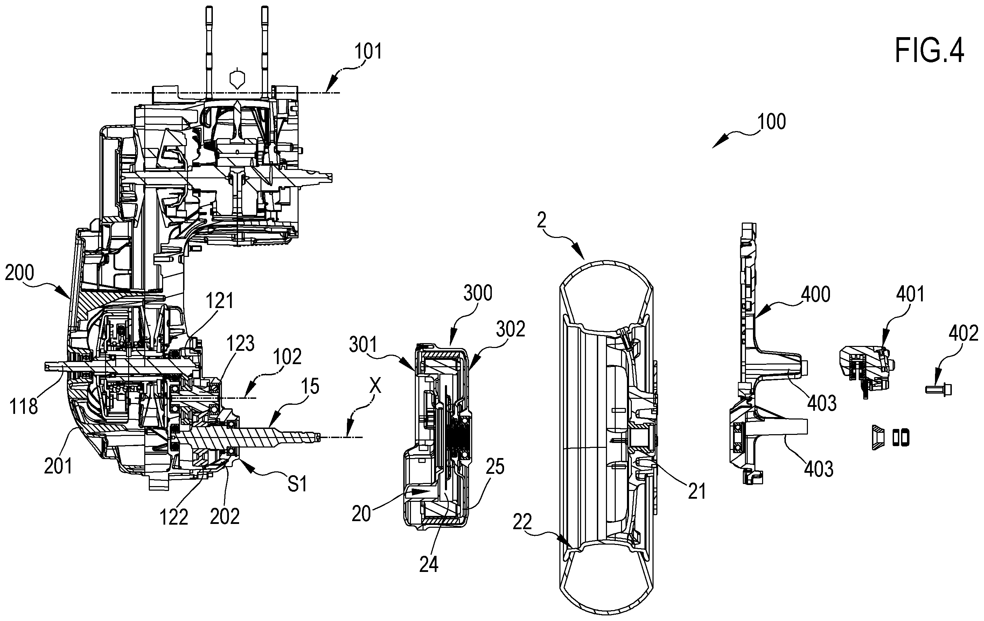

Figure 1 is a perspective view of a rear part of a *scooter-type* motorcycle to which the invention applies. More precisely, this figure shows a driving wheel assembly 100 (or assembly 100) which includes the rear wheel 2 (or driving wheel 2) and an engine block 3 (comprising a thermal engine 10 and a transmission assembly as better indicated below) which, according to a *per se* known solution, is connected to a motorcycle frame so as to swing about an axis 101 (drawn in Figures 1 and 4). Figure 2 is instead an exploded view of the assembly 100 of Figure 1 and allows some essential components of the invention to be better seen. Similarly, Figures 3 and 4 are (respectively front and exploded) sectional views of the assembly of Figure 1.

The motorcycle 1 according to the invention comprises a propulsion unit configured to supply power to the driving wheel 2. The propulsion unit is of the hybrid type and comprises an internal combustion engine 10 (or engine 10) and an electric machine 20 which can be operated in combination with or independently of the engine 10. The electric machine 20 is connected to a battery (not shown in the figures) preferably supported by the motorcycle frame. Preferably, the electric machine 20 is of the reversible type in order to operate as an electric motor or alternatively as an electric generator to recharge the battery.

The motor vehicle 1 comprises a transmission assembly 11 which mechanically connects the driving shaft 4 of the engine 10 to the driving wheel 2. The transmission assembly 11 is at least partially housed in a first shell 200 and comprises at least one transmission shaft 15 (hereinafter also referred to only by the term *"shaft 15"*) which protrudes from the first shell 200. This shaft 15 is connected to the hub 21 of the driving wheel 2 in such a way as to transfer the driving torque from the engine 10 thereto.

The configuration of the engine 10 is not relevant to the present invention. Only the crankcase 10B of the engine 10 is shown in the figures, i.e., the part which receives the driving shaft 4, to which the small end of the connecting rod that moves the relative piston (not shown) is connected, according to a widely known principle. The figures therefore do not show the cylinder head of the engine 10 which will be connected to the crankcase 10B by means of stud bolts 10C (see Figure 2), also according to principles clearly known to a person skilled in the art.

The first shell 200 containing the transmission assembly 11 is rigidly connected to the crankcase 10B of the engine. In the context of the present invention, the assembly consisting of the engine 10 and the first shell 200 is defined as the engine block 3, as already indicated above, and is hinged to the frame of the motorcycle 1 so as to swing about it.

The configuration of the transmission assembly 11, as well, is not relevant to the present invention. In one possible embodiment thereof visible in the sectional figures, the transmission assembly 11 comprises a continuously variable transmission (CVT) connecting the shaft of the engine 10 to a first intermediate shaft 118. This transmission has a first pulley 111 fitted to the driving shaft 4 and a second pulley 112 mounted on said first intermediate shaft 118. A flexible transmission element 114 is interposed between the two pulleys 111, 112, while a clutch device 119 is operatively interposed between the second pulley 112 and the first intermediate shaft 118 to allow motion to be transmitted between the two components (112, 118) when a predetermined number of revolutions is exceeded, also according to a widely known principle. In the case illustrated, the transmission assembly 11 further comprises a gear transmission 121-122-123 which connects the first intermediate shaft 118 to the transmission shaft 15 (see Figure 4). In particular, in the example illustrated, there are provided a pinion 121 integral with the first intermediate shaft 118, a toothed wheel 122 integral with the transmission shaft 15, and an intermediate gear 123 which rotates about an axis 102 (also indicated in Figure 4) parallel to the rotation axis of the intermediate shaft 118 and to the rotation axis X of the transmission shaft 15. This transmission gear 123 comprises a first toothed portion engaging the pinion 121 and a second toothed portion engaging the toothed wheel 122. Overall, the gear transmission develops a reduction gear ratio between the two shafts (intermediate 118 and transmission 15 shafts), also according to a *per se* known principle.

The electric machine 20 comprises a stator 24 and a rotor 25 which rotates with respect to the stator 24. According to the present invention, the electric machine 20 is housed in a second shell 300, different from the first shell 200, wherein said second shell 300 is arranged inside the rim 22 of the driving wheel 2. According to the invention, said second shell 300 is connected to the first shell 200 and is crossed by the transmission shaft 15. The electric machine 20 is configured so that, inside the second shell 300, the stator 24 holds a fixed position. Instead, the rotor 25 is constrained, directly or indirectly, to the transmission shaft 15 so as to rotate together and synchronously with the shaft 15 inside the second shell 300. The rotation axis of the rotor 25 therefore coincides with the rotation axis X of the transmission shaft 15.

According to the invention, the second shell 300 is therefore configured to contain the stator 24 and the rotor 25 of the electric machine 20. Therefore, this second shell 300 keeps these components (24, 25) separate and isolated from the external environment.

Differently from to the solutions of the prior art, the electric part of the hybrid propulsion is therefore separate from the mechanical one, i.e., external to the first shell 200 where the transmission assembly 11 is housed. This solution facilitates the design of the transmission assembly 11 and at the same time allows the lateral dimensions of the first shell 200, i.e., of the rear part of the motorcycle 1, to be contained. In this regard, in terms of lateral dimensions, also the position of the second shell 300 inside the rim 22 of the rear wheel 1 turns out to be extremely advantageous.

According to a possible embodiment, the first shell 200 comprises at least a first portion 201 and at least a second portion 202 rigidly connected to each other to receive the components of the transmission assembly 11 and the lubricating liquid necessary for the operation thereof. The second shell 300 is constrained to the first shell 200 at the second portion 202. In other words, a part of the first shell 200 is advantageously used for positioning the second shell 300 containing the electric machine 20.

According to a possible embodiment (not shown in the figures), the second shell 300 is rigidly connected to the first shell 200, for example through screw fastening means. In an alternative embodiment, which is preferable in terms of assembling speed, the second shell 300 is engaged with a mounting surface S1 (see Figure 4) defined by the second portion 202 of the first shell 200. On the other hand, anti-rotation means are preferably arranged between the two shells 200, 300, which prevent or dampen the relative rotation of the second shell 300 with respect to the first shell 200. One embodiment of such an anti-rotation means will be described below. In general, such anti-rotation means are configured so as to allow the second shell 300 to maintain (during the movement of the motorcycle 1 and/or during the activation of the electric machine 20) a substantially stable position with respect to the first shell 200, without however rigidly constraining the two shells 200, 300 in question to each other.

With reference to the sectional view of Figure 3, it may be seen that the second shell 300 is arranged inside the rim 22 so as to be interposed between the first shell 200 and the hub 21 of the rear wheel 2. Therefore, preferably, the hub 21 of the rear wheel 2 is connected to a first portion L1 of the transmission shaft 15 which is different from a second portion L2 of the same on which the second shell 300, and therefore the rotor 25 contained therein, rests (i.e., along which it is positioned). Furthermore, in the solution shown in the figures a third portion L3 of the transmission shaft 15 is also identified which is operatively connected to the transmission assembly 11 and which is opposite to the first portion L1 with respect to the second portion L2. The arrangement of the second shell 300 inside the rim 22 and on different portions L1, L2 of the transmission shaft 15 is extremely advantageous also for assembling and disassembling the driving wheel assembly 100. In this regard, with reference to Figure 4, such assembly is assembled by first engaging the second shell 300 with the transmission shaft 15; in particular, the second shell 300 is coupled with the first shell 200 with the aid of the mounting surface S1 defined on the second portion 202. When the positioning is terminated, the rotor 25 of the electric machine 20 is mechanically connected to the transmission shaft 15 itself. Subsequently, the hub 21 of the driving wheel 2 is fitted onto the transmission shaft 15 in such a way that the second shell 300 remains enclosed in the inner space delimited by the rim 22.

In the solution illustrated in the figures, the assembly also involves mounting, at the end of the transmission shaft 15, a support bracket 400 on a side opposite to the side where the first shell 200 is located. More precisely, this support bracket 400 is mounted so as to rotate about the rotation axis X of the shaft 15, i.e., so as to oscillate with respect to the same and with respect to the driving wheel 2. The support bracket 400 is also connected to the crankcase 10B of the engine 10, thus forming a sort of *"swingarm"* rigidly constrained to the engine block 3. Therefore, the support bracket 400 swings together with the engine block 3 relative to the motorcycle frame 1.

In the embodiment visible in the figures, the support bracket 400 supports a brake calliper 401 connected thereto through screw connection means 402. This connection takes place following the mounting of the support bracket 400 on the transmission shaft 15. The same support bracket 400 also comprises parts 403 configured to support the muffler (not shown) of the motorcycle 1 and/or to provide a connection for possible spring-shock absorber assemblies belonging to the rear suspension of the motorcycle.

From Figures 2 and 4 and based on what has just been described, it is evident that also the possible disassembly of the driving wheel assembly 100 is easy to perform. If the rear wheel 2 needs to be replaced, for example following a puncture, this operation can be easily performed by first removing the support bracket 400 and then removing the driving wheel 2 from the transmission shaft 15. Advantageously, the electric machine 20 is not affected by this operation and can therefore remain in its operating position, i.e., mounted inside the second shell 200 which is in turn mounted on the transmission shaft 15 and coupled with the second portion 202 of the first shell 200. At the same time, the replacement operation of the driving wheel 2 does not affect the first shell 200.

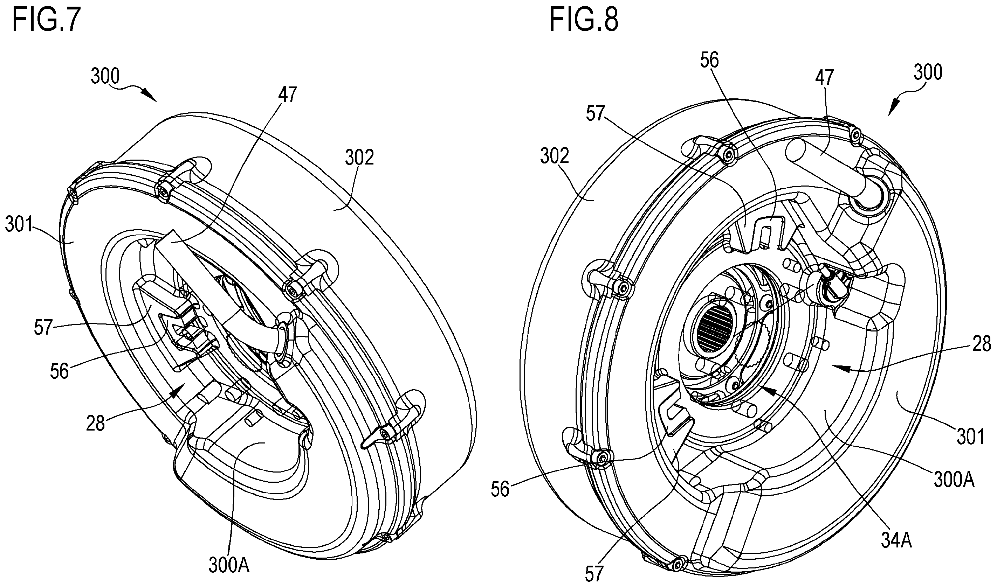

According to a preferred embodiment of the second shell 300 (visible in Figures 7 to 9), it comprises a first half-shell 301 and a second half-shell 302 rigidly connected to each other. The first half-shell 301 is configured to couple with the second portion 202 of the first shell 200. The two half-shells 301, 302 each comprise a central opening 34A, 34B which allows the second shell 300 to be engaged with the transmission shaft 15. The first half-shell 301 couples with the centring surface of the first shell 200 at its central opening 34A, as can be seen from the comparison between Figures 3 and 4. The second half-shell 302 is instead pivotably supported on the shaft 15. In other words, the second half-shell 302 is not rotationally constrained to the shaft 15, but on the contrary can remain stationary during the rotation of the latter.

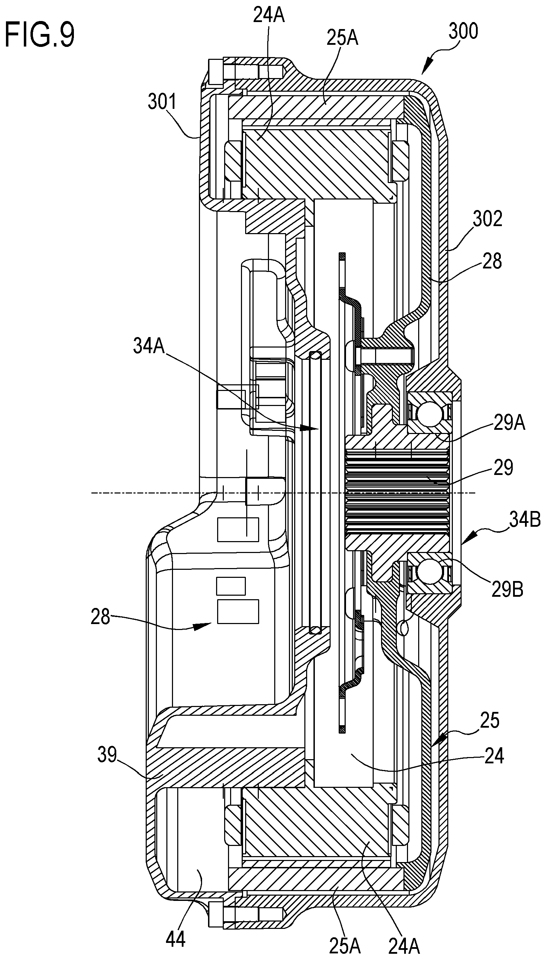

In the embodiment shown in the figures, the first half-shell 301 is configured so as to define a seat 28 in which, after the assembly, a region of the second portion 202 of the first shell 200 is at least partially received. The first half-shell 301 further comprises an inner portion 39 to which the stator 24 of the electric machine 20 is connected (see Figure 9). In particular, this portion 39 is substantially cylindrical and coaxial with the rotation axis of the transmission shaft 15. The first half-shell 301 is further configured so as to define an inner space 44 for receiving the electric cables necessary for the operation of the electric machine 20. Preferably, the first half-shell 301 comprises an opening 47 through which the electric cables can exit the second shell 300 to be connected to an electric battery or to other components which allow the operation of the electric machine 20.

In an alternative embodiment, not shown in the figures, the stator 24 of the electric machine 20 could be supported by a portion of the second half-shell 302. At the same time, also the exit opening for the electrical cables could be defined in the second half-shell 302.

With reference in particular to Figure 9, the rotor 25 of the electric machine 20 comprises a support portion 28 which supports a plurality of rotor windings 25A. This support portion 28 is indirectly connected to the transmission shaft 15 through a toothed sleeve 29 engaged with the shaft itself and which therefore allows the rotor 25 to rotate at the same speed as the shaft 15. The second half-shell 302 is mounted on the outer surface 29A of said toothed sleeve 29 through at least one bearing 29B which allows the same half-shell 302 to maintain a fixed position during the rotation of the rotor 25 or of the shaft 15.

More precisely, according to a preferred, but not exclusive, embodiment of the invention, the rotor 25 is arranged inside the second shell 300 in such a way as to rotate about the shaft 15 in a radially outer position with respect to the stator 24. It is thereby meant an arrangement such that the stator windings 24A are located radially between the transmission shaft 15 and the rotor windings 25A.

In an alternative embodiment (not shown), the radial positions of the stator and rotor could be reversed, whereby the rotor could rotate within the stator.

As indicated above, according to a preferred embodiment, anti-rotation means of the second shell 300 are provided which prevent or at least dampen the relative rotation between the two shells 200, 300 when the motorcycle 1 is running, i.e., when the driving wheel 2 rotates.

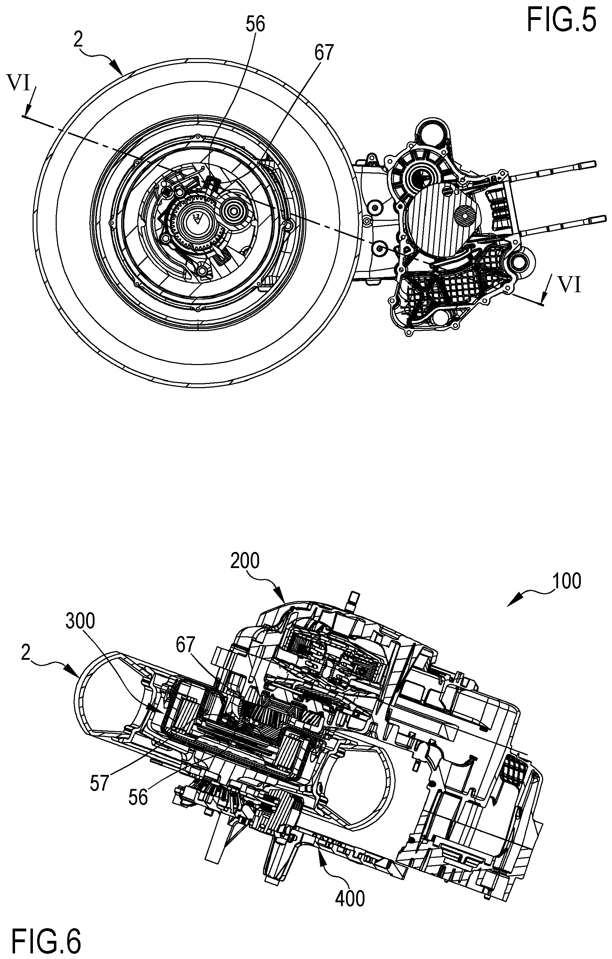

With reference to Figures 5 and 6, in a possible embodiment thereof these anti-rotation means comprise first (for example, female-shaped) coupling elements associated with the external surface 300A of the second shell 300 facing and adjacent to the second portion 202 of the first shell 200. Second (for example, male-shaped) coupling elements are associated with said second portion 202 and are configured so as to engage with the first coupling elements following coupling of the second shell 300 with the first shell 200.

In the embodiment shown in the figures, the first coupling elements are defined by a pair of inserts 56, made for example of rubber, each arranged in a corresponding housing 57 defined on the external surface 300A of the second shell 300. The second coupling elements instead consist of a pair of protrusions 67 of the second portion 202 of the first shell 200 each projecting so as to be inserted into a slot 56A defined through a corresponding one of said inserts 56. Therefore, the anti-rotation effect of the second shell 300 is obtained following the coupling between the two shells 200, 300. Consequently, the disengagement between the first and second coupling elements is obtained when the two shells 200 and 300 are released from each other. In the solution illustrated, the degree of damping increases as the stiffness of the rubber used to make the abovementioned inserts 56 increases.

The motorcycle 1 according to the invention allows the intended tasks and purposes to be fully accomplished. In particular, the physical separation between the transmission assembly and the electric machine is extremely advantageous both in terms of design and in terms of production versatility. In fact, the first shell 200 and the transmission group 11 contained therein can be advantageously used to manufacture both a scooter of the hybrid type according to the invention and a traditional scooter, i.e., a scooter without the electric part. Therefore, a line may be provided for the engine block alone, and this line may feed at least two other lines, each one for a specific scooter type (hybrid and non-hybrid).

Furthermore, the positioning of the electric machine, external and separate from the transmission assembly, allows optimizing the operation of the machine itself since it is not affected by the mechanical transmission between the thermal engine and the transmission shaft.

## Claims

1. A saddle-ride motorcycle (1) comprising at least one driving wheel (2) and a hybrid propulsion unit, wherein said propulsion unit comprises:
- a thermal combustion engine (10) including a driving shaft (4);
- a transmission assembly (11) mechanically connecting said driving shaft (4) to said at least one driving wheel (2), wherein said transmission assembly (11) is at least partially housed in a first shell (200) and comprises at least one transmission shaft (15) protruding from said first shell (200) and connected to the hub (21) of said at least one driving wheel (2);
- an electric machine (20) that can be operated in combination with or independently of said thermal combustion engine (10),
**characterized in that**
said electric machine (20) is housed in a second shell (300) arranged within the rim (22) of said driving wheel (2), wherein said second shell (300) is rigidly connected to said first shell (200) and is crossed by said transmission shaft (15), wherein said electric machine (20) comprises a stator (24) holding a fixed position within said second shell (300) and a rotor (25) constrained to said transmission shaft (15) to rotate within said second shell (300), wherein said second shell (300) is configured to enclose said stator (24) and said rotor (25).

2. Motorcycle (1) according to claim 1, wherein said first shell (200) comprises at least a first portion (201) and a second portion (202) connected to each other, wherein said second portion (202) is coupled with said second shell (300).

3. Motorcycle (1) according to claim 2, wherein between the first shell (200) and the second shell (300) anti-rotation means are provided which prevent or dampen a relative rotation between said first shell (200) and said second shell (300).

4. Motorcycle (1) according to any one of claims 1 to 3, wherein said second shell (300) comprises a first half-shell (301) and a second half-shell (302) rigidly connected to said first half-shell (301),

5. Motorcycle (1) according to claim 4 when depending on claim 2 or 3, wherein said first half-shell (301) is rigidly connected to said second portion (202) of said first shell (200).

6. Motorcycle (1) according to any one of claims 3 to 5, wherein said second half-shell (302) is pivotably supported on said transmission shaft (15).

7. Motorcycle (1) according to claim 4, 5 or 6, wherein said stator (24) is connected to a portion of at least one of said half-shells (301, 302) and comprises stator windings (24A).

8. Motorcycle (1) according to any one of claims 1 to 7, wherein said rotor (25) comprises a support portion (28) supporting a plurality of rotor windings (25A), wherein said support portion (28) is connected, directly or indirectly, to said transmission shaft (15) so as to rotate at the same speed.

9. Motorcycle (1) according to claim 8, wherein said rotor (25) is arranged within said second shell (300) and rotates about said transmission shaft (15) in a radially outer position relative to the stator (24).

10. Motorcycle (1) according to any one of the preceding claims, wherein said rim (22) of said driving wheel (2) is connected to a first portion (L1) of said transmission shaft (15) different from a second portion (L2) thereof on which said second shell (300) and said rotor (25) rest.

11. Motorcycle (1) according to claim 10, wherein said transmission shaft (15) comprises a third portion (L3) operatively connected to said transmission assembly (11), wherein said first portion (L1) and third portion (L3) are opposite to each other with respect to said second portion (L2).

12. Motorcycle (1) according to any one of the preceding claims, wherein said rim (22) and said rotor (25) are torsionally constrained to each other.

## Patentansprüche

1. Motorrad (1) mit Sattel, das mindestens ein Antriebsrad (2) und eine hybride Antriebseinheit umfasst, wobei die Antriebseinheit Folgendes umfasst:
- einen Verbrennungsmotor (10) mit einer Antriebswelle (4); - eine Getriebeeinheit (11), die die Antriebswelle (4) mechanisch mit dem mindestens einen Antriebsrad (2) verbindet, wobei die Getriebeeinheit (11) zumindest teilweise in einem ersten Gehäuse (200) aufgenommen ist und mindestens eine Getriebewelle (15) umfasst, die aus dem ersten Gehäuse (200) herausragt und mit der Nabe (21) des mindestens einen Antriebsrads (2) verbunden ist;
- eine elektrische Maschine (20), die in Kombination mit oder unabhängig voneinander vom Verbrennungsmotor (10) betrieben werden kann,
**dadurch gekennzeichnet, dass**
die elektrische Maschine (20) in einem zweiten Gehäuse (300) aufgenommen ist, das innerhalb des Felgenrandes (22) des Antriebsrades (2) angeordnet ist, wobei das zweite Gehäuse (300) fest mit dem ersten Gehäuse (200) verbunden ist und von der Getriebewelle (15) durchquert wird, wobei die elektrische Maschine (20) einen Stator (24), der eine feste Position innerhalb der zweiten Hülle (300) einnimmt, und einen Rotor (25) umfasst, der an der Getriebewelle (15) angebracht ist, um sich innerhalb des zweiten Gehäuses (300) zu drehen, wobei das zweite Gehäuse (300) so ausgebildet ist, dass es den Stator (24) und den Rotor (25) umschließt.

2. Motorrad (1) nach Anspruch 1, wobei das erste Gehäuse (200) mindestens einen ersten Abschnitt (201) und einen zweiten Abschnitt (202) umfasst, die miteinander verbunden sind, wobei der zweite Abschnitt (202) mit dem zweiten Gehäuse (300) gekoppelt ist.

3. Motorrad (1) nach Anspruch 2, wobei zwischen dem ersten Gehäuse (200) und dem zweiten Gehäuse (300) Verdrehsicherungsmittel bereitgestellt sind, die eine relative Drehung zwischen dem ersten Gehäuse (200) und dem zweiten Gehäuse (300) verhindern oder dämpfen.

4. Motorrad (1) nach Anspruch 1 bis 3, wobei das zweite Gehäuse (300) eine erste Halbschale (301) und eine zweite Halbschale (302) umfasst, die starr mit der ersten Halbschale (301) verbunden ist.

5. Motorrad (1) gemäß Anspruch 4 in Abhängigkeit von Anspruch 2 oder 3, wobei das erste Gehäuse (301) starr mit dem zweiten Abschnitt (202) des ersten Gehäuses (200) verbunden ist.

6. Motorrad (1) gemäß einem der Ansprüche 3 bis 5, wobei das zweite Gehäuse (302) schwenkbar an der Getriebewelle (15) gelagert ist.

7. Motorrad (1) gemäß Anspruch 4, 5 oder 6, wobei der Stator (24) mit einem Abschnitt mindestens einer der Halbschalen (301, 302) verbunden ist und Statorwicklungen (24A) umfasst.

8. Motorrad (1) nach einem der Ansprüche 1 bis 7, wobei der Rotor (25) einen Stützabschnitt (28) umfasst, der eine Vielzahl von Rotorwicklungen (25A) stützt, wobei der Stützabschnitt (28) direkt oder indirekt so mit der Getriebewelle (15) verbunden ist, dass er sich mit derselben Geschwindigkeit dreht.

9. Motorrad (1) gemäß Anspruch 8, wobei der Rotor (25) innerhalb des zweiten Gehäuses (300) angeordnet ist und sich um die Getriebewelle (15) in einer radial äußeren Position relativ zum Stator (24) dreht.

10. Motorrad (1) nach einem der vorangegangenen Ansprüche, wobei der Felgenrand (22) des Antriebsrades (2) mit einem ersten Abschnitt (L1) der Getriebewelle (15) verbunden ist, der sich von einem zweiten Abschnitt (L2) derselben unterscheidet, auf dem das zweite Gehäuse (300) und der Rotor (25) aufliegen.

11. Motorrad (1) nach Anspruch 10, wobei die Getriebewelle (15) einen dritten Abschnitt (L3) umfasst, der mit der Getriebeanordnung (11) wirkverbunden ist, wobei der erste Abschnitt (L1) und der dritte Abschnitt (L3) in Bezug auf den zweiten Abschnitt (L2) einander gegenüberliegen.

12. Motorrad (1) nach einem der vorangegangenen Ansprüche, wobei die Felge (22) und der Rotor (25) torsionsfest miteinander angebracht sind.

## Revendications

1. Une motocyclette à selle à chevaucher (1) comprenant au moins une roue motrice (2) et une unité de propulsion hybride, ladite unité de propulsion comprenant :
- un moteur à combustion thermique (10) incluant un arbre moteur (4) ;
- un ensemble de transmission (11) connectant mécaniquement ledit arbre moteur (4) à ladite ou lesdites roue(s) motrice(s) (2), ledit ensemble de transmission (11) étant au moins partiellement logé dans une première coque (200) et comprenant au moins un arbre de transmission (15) faisant saillie depuis ladite première coque (200) et connecté au moyeu (21) de ladite ou desdites roue(s) motrice(s) (2) ;
- une machine électrique (20) qui peut être actionnée en combinaison avec ou indépendamment dudit moteur à combustion thermique (10) ;
**caractérisée en ce que** ladite machine électrique (20) est logée dans une deuxième coque (300) agencée à l'intérieur de la jante (22) de ladite roue motrice (2), ladite deuxième coque (300) est connectée rigidement à ladite première coque (200) et est traversée par ledit arbre de transmission (15), ladite machine électrique (20) comprenant un stator (24) qui maintient une position fixe à l'intérieur de ladite deuxième coque (300) et un rotor (25) lié audit arbre de transmission (15) pour tourner à l'intérieure de ladite deuxième coque (300), ladite deuxième coque (300) étant configurée pour envelopper ledit stator (24) et ledit rotor (25).

2. Motocyclette (1) selon la revendication 1, dans laquelle ladite première coque (200) comprend au moins une première partie (201) et une deuxième partie (202) connectées l'une à l'autre, ladite deuxième partie (202) étant couplée à ladite deuxième coque (300).

3. Motocyclette (1) selon la revendication 2, dans laquelle entre la première coque (200) et la deuxième coque (300), des moyens anti-rotation sont prévus, lesquels empêchent ou amortissent une rotation relative entre ladite première coque (200) et ladite deuxième coque (300).

4. Motocyclette (1) selon l'une quelconque des revendications 1 à 3, dans laquelle ladite deuxième coque (300) comprend une première demi-coque (301) et une deuxième demi-coque (302) connectées rigidement à ladite première demi-coque (301).

5. Motocyclette (1) selon la revendication 4, lorsqu'elle est dépendante de la revendication 2 ou 3, dans laquelle ladite première demi-coque (301) est rigidement connectée à ladite deuxième partie (202) de ladite première coque (200).

6. Motocyclette (1) selon l'une quelconque des revendications 3 à 5, dans laquelle ladite deuxième demi-coque (302) est supportée pivotante sur ledit arbre de transmission (15).

7. Motocyclette (1) selon la revendication 4, 5 ou 6, dans laquelle ledit stator (24) est connecté à une partie d'au moins l'une desdites demi-coques (301, 302) et comprend des enroulements (24A).

8. Motocyclette (1) selon l'une quelconque des revendications 1 à 7, dans laquelle ledit rotor (25) comprend une partie de support (28) supportant une pluralité d'enroulements de rotor (25A), ladite partie de support (28) étant connectée, directement ou indirectement, audit arbre de transmission (15) de façon à tourner à la même vitesse.

9. Motocyclette (1) selon la revendication 8, dans laquelle ledit rotor (25) est agencé à l'intérieur de ladite deuxième coque (300) et tourne autour dudit arbre de transmission (15) dans une position radiale plus externe par rapport au stator (24).

10. Motocyclette (1) selon l'une quelconque des revendications précédentes, dans laquelle ladite jante (22) de ladite roue motrice (2) est connectée à une première partie (L1) dudit arbre de transmission (15) différente d'une deuxième partie (L2) de cet arbre sur laquelle ladite deuxième coque (300) et ledit rotor (25) reposent.

11. Motocyclette (1) selon la revendication 10, dans laquelle ledit arbre de transmission (15) comprend une troisième partie (L3) connectée en fonctionnement audit ensemble de transmission (11), lesdites première partie (L1) et troisième partie (L3) étant face à face par rapport à ladite deuxième partie (L2).

12. Motocyclette (1) selon l'une quelconque des revendications précédentes, dans laquelle ladite jante (22) et ledit rotor (25) sont liés en torsion l'une à l'autre.
